# EUROPEAN PATENT APPLICATION

(11) **EP 4 145 410 A1**
(43) Date of publication of application: **08.03.2023**
(21) Application number: 20933211.3
(22) Date of filing: 29.05.2020
(51) Int. Cl.: G07C 9/00

(54) **USER AUTHENTICATION-BASED ELECTRONIC KEY USING EXTERNAL TERMINAL APPARATUS, AND OPERATION METHOD FOR SAME**

(30) Priority: 29.04.2020 KR 20200052751
(71) Applicant: Platformbase Co., Ltd, Suwon-si, Gyeonggi-do 16648 (KR)
(72) Inventor: KIM, Bum Soo, Namyangju-si Gyeonggi-do 12160 (KR)
(74) Representative: Viering, Jentschura & Partner mbB Patent- und Rechtsanwälte
(86) International application number: PCT/KR2020/006979
(87) International publication number: WO 2021/221225

(57) **Abstract**

The present disclosure relates to a user authentication based electronic key operating method using an external terminal device including, transmitting a first UID of the electronic key to an external terminal device in which user authentication has been completed via a first wireless communication means, receiving an activation signal which activates the electronic key from the external terminal device via the first wireless communication means when the first UID is included in at least one second UID stored in the external terminal device, receiving a third UID of the electronic locking device by inserting the activated electronic key into the electronic locking device, and transmitting an unlocking request signal which is a signal requesting the unlocking to the electronic locking device according to a determination result of whether to unlock based on the third UID.

## Description

### [Technical Field]

The present disclosure relates to a user authentication based electronic key using an external terminal device and an operating method thereof.

### [Background Art]

The locking device for security installed in doors, lockers, and facilities is classified into a mechanical locking device and an electronic locking device. The mechanical locking device which uses a key to open and close a door or a locker has a problem for a security due to manipulation or storage of the key and a problem in that when the key is lost, the locking device needs to be replaced.

In view of this, an electronic locking device which opens and closes the door using a password, a fingerprint or a voice of a user or an electronic key is frequently used. Since there is no worry of losing the key, a general user can easily open and close a door or a locker through simple authentication, and the security is excellent so that the market of the electronic locking device is rapidly growing in recent years.

Accordingly, a user authentication based electronic key using an external terminal device which can be efficiently managed while further improving the security of the electronic key used for the electronic locking device and an operating method thereof are requested.

### [Disclosure]

### [Technical Problem]

A technical object to be achieved by the present disclosure is to provide an electronic key security system which manages the access of a user to an electronic key by means of user authentication and activates the electronic key according to a user authentication result to efficiently lock and unlock the locking device.

Technical objects of the present disclosure are not limited to the aforementioned technical objects and other technical objects which are not mentioned will be apparently appreciated by those skilled art from the following description.

### [Technical Solution]

In order to achieve the above-described technical objects, according to the exemplary embodiment of the present disclosure, an operating method of a user authentication based electronic key using an external terminal device includes: transmitting a first UID of the electronic key to an external terminal device in which user authentication has been completed via a first wireless communication means; receiving an activation signal which activates the electronic key from the external terminal device via the first wireless communication means when the first UID is included in at least one second UID stored in the external terminal device; receiving a third UID of the electronic locking device by inserting the activated electronic key into the electronic locking device; and transmitting an unlocking request signal which is a signal requesting the unlocking to the electronic locking device according to a determination result of whether to be unlocked based on the third UID.

Desirably, the user authentication may be authentication using at least one of password, fingerprint information, facial information, iris information, vein distribution information, and voice information.

Desirably, in the transmitting of a first UID of the electronic key, the first UID may be transmitted to the external terminal device in which location authentication which is authentication about a location of the terminal device is further completed.

Desirably, the external terminal device may be one of a smart phone, a tablet, a wearable device, and a personal computer.

Desirably, the electronic key operating method may further include, between the receiving of an activation signal and the receiving of a third UID, activating a second wireless communication unit to be connected to the external terminal device or a management server, and a usage history of the electronic key may be transmitted to the external terminal device or the management server via the second wireless communication means.

Desirably, the second wireless communication means may be one of Bluetooth, Zigbee, and wireless LAN.

Desirably, the first wireless communication means may be NFC.

Further, in order to achieve the above-described technical objects, according to an exemplary embodiment of the present disclosure, a user authentication based electronic key using an external terminal device, includes: a power supply module including a battery; a first wireless communication module which transmits a first UID of the electronic key to the external terminal device in which the user authentication has been completed, via the first wireless communication means and when the first UID is included in at least one second UID stored in the external terminal device, receives an activation signal which activates the electronic key, from the external terminal device, via the first wireless communication means; and a locking device connection module which is inserted into the electronic locking device to receive a third UID of the electronic locking device and transmits an unlocking request signal which is a signal requesting the unlocking to the electronic locking device in accordance with the determination result of whether to unlock based on the third UID.

Desirably, the user authentication based electronic key may further include a second wireless communication module which activates a second wireless communication means when the activation signal is received to connect to the external terminal device or a management server to transmit a usage history of the electronic key to the external terminal device or the management server.

Further, in order to achieve the above-described technical objects, according to an exemplary embodiment of the present disclosure, a security system using user authentication based electronic key includes: an external terminal device which performs the user authentication; an electronic key which transmits a first UID to the external terminal device, via the first wireless communication means and when the first UID is included in at least one second UID stored in the external terminal device, receives an activation signal which activates the electronic key, from the external terminal device, via the first wireless communication means; an electronic locking device which transmits a third UID to the electronic key when the activated electronic key is inserted and receives an unlocking request signal which is a signal requesting the unlocking from the electronic key; and a management server which is connected to the electronic key via the second wireless communication means to store a usage history of the electronic key.

### [Advantageous Effects]

The effect according to the present disclosure is as follows:
According to the user authentication based electronic key using an external terminal device proposed by the present disclosure, a digital structure authentication method which registers and manages a password and biometric information of a user is used, rather than a mechanical structure so that the security of the locking device for the electronic key may be strengthened.

According to the electronic key security system proposed by the present disclosure, a plurality of locking devices may be used or managed using one electronic key so that the management convenience and the cost saving effect may be enhanced.

The effects of the present disclosure are not limited to the technical effects mentioned above, and other effects which are not mentioned can be clearly understood by those skilled in the art from the following description

### [Description of Drawings]

FIG. 1 is a diagram illustrating an electronic key security system according to an exemplary embodiment of the present disclosure.
FIG. 2 is a flowchart of an operating method of a user authentication based electronic key using an external terminal device according to an exemplary embodiment of the present disclosure.
FIG. 3 is a block diagram of a user authentication based electronic key using an external terminal device according to an exemplary embodiment of the present disclosure.
FIGS. 4A to 4C are application UIs of an external terminal device illustrated to explain a user registration process in an exemplary embodiment of the present disclosure.
FIG. 5 is an application UI of an external terminal device illustrated to explain an electronic key activation process in an exemplary embodiment of the present disclosure.

### [Best Mode]

Those skilled in the art may make various modifications to the present disclosure and the present disclosure may have various exemplary embodiments, and thus specific embodiments will be illustrated in the drawings and described in detail in the detailed description. However, it should be understood that the disclosure is not limited to the specific embodiments, but includes all changes, equivalents, or alternatives which are included in the spirit and technical scope of the present disclosure. In the description of respective drawings, similar reference numerals designate similar elements.

Terms such as first, second, A, or B may be used to describe various components, but the components are not limited by the above terms. The above terms are used only to discriminate one component from another component. For example, without departing from the scope of the present disclosure, a first component may be referred to as a second component, and similarly, a second component may be referred to as a first component. A term of and/or includes combination of a plurality of related elements or any one of the plurality of related elements.

It should be understood that, when it is described that an element is "coupled" or "connected" to another element, the element may be "directly coupled" or "directly connected" to the another element or "coupled" or "connected" to the another element through a third element. In contrast, when it is described that an element is "directly coupled" or "directly connected" to another element, it should be understood that no element is not present therebetween.

Terms used in the present application are used only to describe a specific exemplary embodiment but are not intended to limit the present disclosure. A singular form may include a plural form if there is no clearly opposite meaning in the context. In the present application, it should be understood that term "include" or "have" indicates that a feature, a number, a step, an operation, a component, a part or the combination thereof described in the specification is present, but do not exclude a possibility of presence or addition of one or more other features, numbers, steps, operations, components, parts or combinations, in advance.

If it is not contrarily defined, all terms used herein including technological or scientific terms have the same meaning as those generally understood by a person with ordinary skill in the art. Terms defined in generally used dictionary shall be construed that they have meanings matching those in the context of a related art, and shall not be construed in ideal or excessively formal meanings unless they are clearly defined in the present application.

Hereinafter, exemplary embodiments according to the present disclosure will be described in detail with reference to accompanying drawings.

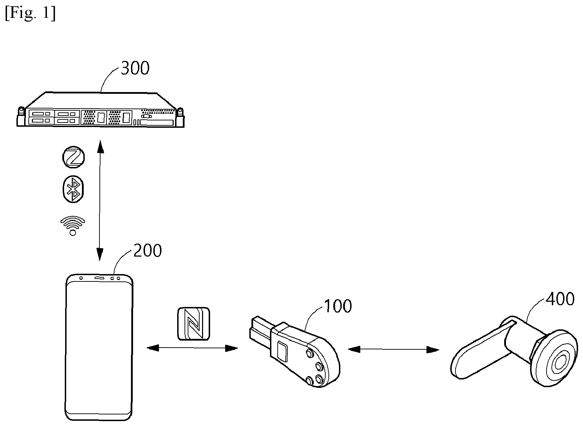

FIG. 1 is a diagram illustrating an electronic key security system according to an exemplary embodiment of the present disclosure.

Referring to FIG. 1, a user authentication based electronic key security system using an external terminal device according to an exemplary embodiment of the present disclosure may include an electronic key, an electronic locking device, an external terminal device, and a management server.

The electronic key is a key for locking and unlocking the electronic locking device and may be activated according to authentication information of a user received from an external terminal device.

The electronic locking device may be a locking device used for a door, a drawer, a cabinet, or a storage box, such as a pad lock, a Euro profile double, a rim lock, a drawer locker, and a cam lock.

The electronic locking device may include a separate power source or be temporally supplied with a power from a connection terminal of the electronic key by means of a connection terminal to unlock the locked electronic locking device. At this time, the connection terminal of the electronic locking device and the connection terminal of the electronic key may not only supply power by means of physical contact, but also perform the authentication by exchanging identifiers UID of each other. The authentication between the electronic locking device and the electronic key will be described below in detail.

Since the possession of the electronic key is one of authentication, the higher security than an existing electronic locking device, such as a door lock which simply inputs a password, may be maintained. Specifically, such a small electronic locking device has a small volume and needs to be installed in several places, so that there is no power source in the electronic locking device. Therefore, it is very useful to unlock the electronic locking device while supplying the power from the electronic key.

In the present disclosure, in order to prevent the indiscriminate use of the electronic key, a process of separately authenticating user information for the electronic key may be additionally performed. Specifically, the user authentication is performed using the external terminal device and it may be determined whether the electronic key can be used according to the authentication result thereof. For reference, it goes without saying that various types of authentication methods, such as password, fingerprint authentication, iris authentication, and face authentication may be employed for the user authentication.

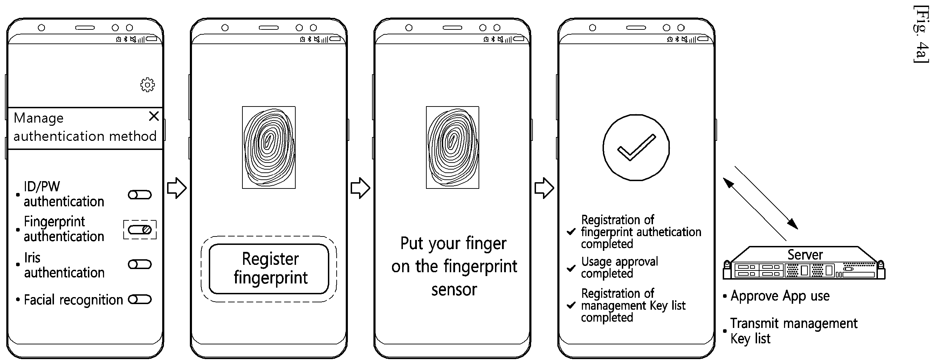

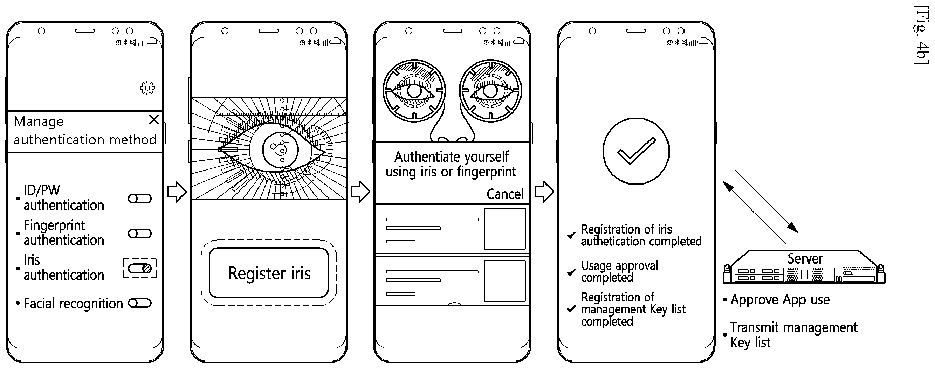

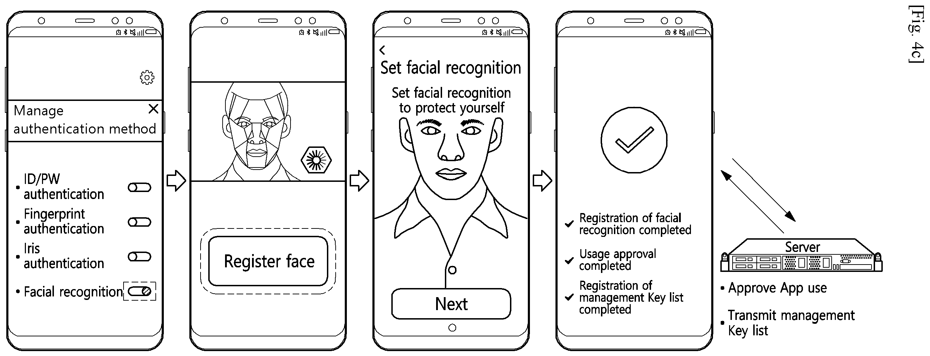

At this time, in the external terminal device, a separate related application or application program needs to be installed and the user registration needs to be performed in advance to perform the authentication. The user registration process is illustrated in FIGS. 4A to 4C.

When it is confirmed that the user is a previously registered user by the user authentication, the external terminal device may send an activation signal to the electronic key to activate the electronic key. To this end, wireless communication, such as NFC communication, may be performed between the electronic key and the external terminal device and the communication method is not specifically limited.

The management server may set the user's access privilege to the electronic key by using the user's authentication information. That is, user registration information about a user who can use the electronic key has been stored in advance in the management server and authentication information received from the external terminal device is compared with the user registration information to assign the user's access privilege. As a comparison result, when it is confirmed that the user is a user who can use the electronic key, the external terminal device receives control information of the electronic key from the management server to perform the above-mentioned activation task of the electronic key. To this end, wired communication or wireless communication such as Zigbee communication or WiFi communication may be performed between the management server and the external terminal and other various types of communication methods may be employed.

After activating the electronic key, an authentication process between the electronic key and the electronic locking device may be performed. Specifically, the electronic key is inserted into the electronic locking device to receive locking control information of the locking device and compares with control information which is received from the external terminal device or determined in advance to lock or unlock the electronic locking device.

In the meantime, the management server may monitor or manage the history of the electronic key for the electronic locking device. To this end, the management server may be provided with history information of the electronic key by means of the external terminal device or a gateway. For example, the management server may receive history information of the electronic key by means of a Bluetooth communication method between the external terminal device and the electronic key and receive history information of the electronic key by means of a Zigbee communication method between the gateway and the electronic key.

In the meantime, the management server may further receive location information of the user to separately authenticate the user information. To this end, the management server may utilize a GPS module included in the external terminal device.

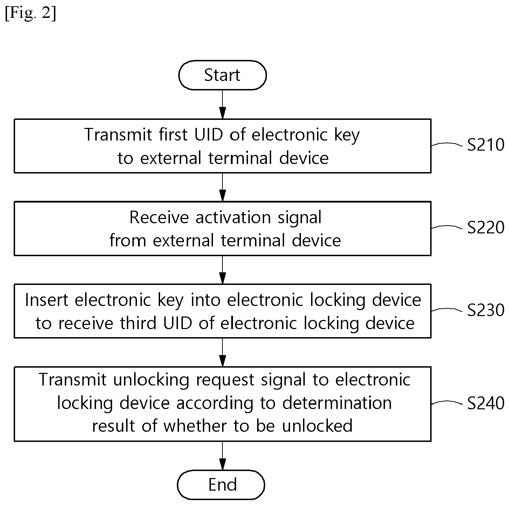

FIG. 2 is a flowchart of an operating method of a user authentication based electronic key using an external terminal device according to an exemplary embodiment of the present disclosure.

In step S210, the electronic key transmits a first unique identifier (UID) of the electronic key to the external terminal device in which the user authentication has been completed by means of a first wireless communication means.

At this time, as a prerequisite that the electronic key performs the step S210, it may be necessary for the user to perform the user authentication by means of the external terminal device first. This is because the electronic key transmits the first UID only to the external terminal device in which the user authentication has been completed.

That is, the electronic key may transmit the UID of the electronic key to an external terminal device in which user authentication has been completed by means of wireless communication using the first wireless communication means. At this time, the first wireless communication means may be near field communication (NFC) based wireless communication, but is not limited thereto so that various wireless communication technologies may be applied.

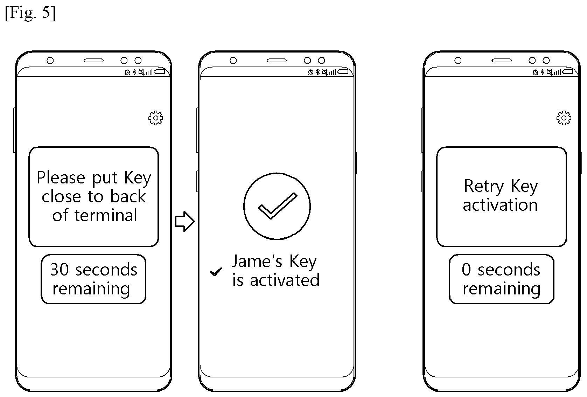

For example, referring to FIG. 5, on the external terminal device in which the user authentication has been completed, a notice asking to place the electronic key to be close to the terminal device may be displayed. When the user brings the electronic key close to the external terminal device, the electronic key may transmit the first UID to the external terminal device.

In another exemplary embodiment, the user authentication may be authentication using at least one of password, fingerprint information, facial information, iris information, vein distribution information, and voice information.

That is, in order to perform the authentication using the external terminal device, the user may use password, fingerprint information, facial information, iris information, vein distribution information, and voice information.

For example, the user may input the password including letters, numbers, and symbols to the external terminal device to perform the authentication. Further, the user may perform the authentication by inputting the fingerprint to a fingerprint sensor of the external terminal device or capturing a face, eyes (iris), palm (vein) with a camera, or inputting a voice to a microphone.

At this time, the authentication information which is input or captured by the user is transmitted to the management server from the external device and is compared with user registration information which has been stored in advance in the management server to perform the user authentication.

In the meantime, when the user authentication is completed in the external terminal device, the authentication may be valid only for a predetermined time (for example, 30 seconds) and the electronic key may need to transmit the first UID to the external terminal device within the time thereof. This is because when the authentication is valid for a long time by one time authentication of the external terminal device, there may be a potential security threat due to the loss or theft of the electronic key.

In still another exemplary embodiment, the electronic key may transmit the first UID to the external terminal device in which location authentication which is authentication about the location of the terminal device has been further completed.

For example, the external terminal device transmits location information acquired using an internal GPS module to the management server and the management server identifies whether the location information is a previously specified location to additionally perform the location authentication.

At this time, the electronic key transmits the first UID only to the external terminal device in which both the user authentication and the location authentication have been completed to further improve the security of the usage of the electronic key.

This may be implemented by means of an application or an application program installed in the external terminal device, and for example, may be implemented by performing the NFC based wireless communication with the electronic key only when both the user authentication and the location authentication have been completed in the application or the application program of the external terminal device.

Further, in still another exemplary embodiment, the external terminal device may be one of a smart phone, a tablet, a wearable device, and a personal computer.

That is, the external terminal device may be a portable terminal device, such as a smart phone, a tablet, or a wearable device so that the user may carry the external terminal device and use it to unlock or lock the locking device as needed. However, the external terminal device does not necessarily have to be portable and may be a terminal device, such as a personal computer or a tablet, which is mounted or embedded in a specific location (for example, in the vicinity of the electronic locking device).

In step S220, if the first UID is included in at least one second UID stored in the external terminal device, the electronic key receives an activation signal which activates the electronic key from the external terminal device by means of the first wireless communication means.

At this time, the external terminal device may receive a UID list of the electronic key which is available for a user who has completed the user registration or user authentication from the management server, store and manage the UID list. When it is determined that the first UID is one of at least one second UID corresponding to the UID list, the external terminal device may transmit the activation signal to the electronic key.

That is, the electronic key may receive the activation signal from the external terminal device by means of the first wireless communication means to activate itself to be operable with a key. For example, a battery power is applied to a main circuit of the electronic key so that when the electronic key is inserted into the electronic locking device, the electronic key may be in a state operable with the key.

In the meantime, when the electronic key is not used for a predetermined time (for example, five minutes) after receiving the activation signal to be activated, the electronic key may be inactivated to save the battery power of the electronic key and reduce the potential security threat due to the loss or theft of the electronic key.

In step S230, when the electronic key is inserted into the electronic key locking device, the electronic key receives a third UID of the electronic locking device.

For example, when the electronic key is inserted into the electronic locking device, the electronic key is electrically connected to the electronic locking device by means of a separate connection terminal to receive the third UID from the electronic locking device. At this time, the electronic locking device may include a separate power source or be temporally supplied with the power by means of the connection terminal.

Finally, in step S240, in accordance with a result of determining whether to unlock based on the third UID, the electronic key transmits an unlocking request signal which is a signal for requesting the unlocking to the electronic locking device.

For example, the electronic key may determine whether to unlock by the following method.

First, the electronic key has stored a UID list of the locking device which can be unlocked with the electronic key and when the third UID is included in the UID list, the locking device corresponding to the third UID may be determined to be unlockable. At this time, the electronic key may have received and stored the UID list from the external terminal device or the management server in advance or receive the UID list from the external terminal device or the management server between the step S220 and the step S240.

Second, when the electronic key transmits the third UID to the external terminal device or the management server and the third UID is included in the UID list using the UID list of the unlockable locking device which has been stored in the external terminal device or the management server in advance, it is determined that the locking device corresponding to the third UID is unlockable and the result is transmitted to the electronic key.

That is, when it is determined that the locking device corresponding to the third UID is unlockable, the electronic key transmits the unlocking request signal to the locking device by means of the separate connection terminal to unlock the locking.

In another exemplary embodiment, the electronic key activates the second wireless communication means between the step S220 and the step S230 to connect to the external terminal device or the management server. At this time, the usage history of the electronic key may be transmitted to the external terminal device or the management server by means of the second wireless communication means.

That is, the electronic key receives the activation signal from the external terminal device to be activated and then activates the second wireless communication means, and may generate a connection relationship with the external terminal device or the management server by means of the second wireless communication means.

At this time, the second wireless communication means may be one of Bluetooth, Zigbee, and wireless LAN (WiFi), but is not limited thereto and various wireless communication technologies may be applied.

Thereafter, the electronic key transmits the usage history to the external terminal device or the management device to be stored therein.

For example, the usage history of the electronic key may include cases of being inserted into the locking device, successful unlocking of the locking device after being inserted, failure to unlock the locking device after being inserted, successful locking of the locking device after being inserted, and failure to lock the locking device after being inserted.

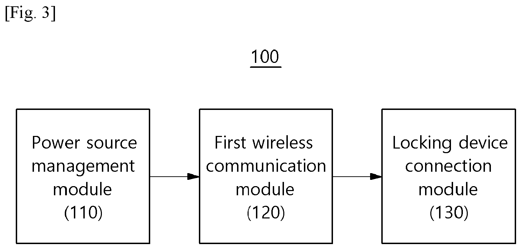

FIG. 3 is a block diagram of a user authentication based electronic key using an external terminal device according to an exemplary embodiment of the present disclosure.

Referring to FIG. 3, the user authentication based electronic key 100 using an external terminal device according to an exemplary embodiment of the present disclosure includes a power supply module 110, a first wireless communication module 120, and a locking device connection module 130. Further, the user authentication based electronic key 100 may further include a first wireless communication module (not illustrated) as an option.

The power supply module 110 includes a battery and supplies a power required for the operation of the electronic key.

The first wireless communication module 120 transmits a first UID of the electronic key to the external terminal device in which the user authentication has been completed, by means of the first wireless communication means and when the first UID is included in at least one second UID stored in the external terminal device, receives an activation signal which activates the electronic key, from the external terminal device, by means of the first wireless communication means.

The locking device connection module 130 is inserted into the electronic locking device to receive the third UID of the electronic locking device and transmits an unlocking request signal which is a signal requesting the unlocking to the electronic locking device in accordance with the determination result of whether to unlock based on the third UID.

When the second wireless communication module (not illustrated) receives the activation signal, the second wireless communication module activates the second wireless communication means to be connected to the external terminal device or the management server to transmit the usage history of the electronic key.

The exemplary embodiments of the present disclosure have been described with reference to the accompanying drawings, but those skilled in the art will understand that the present disclosure may be implemented in another specific form without changing the technical spirit or an essential feature thereof. Thus, it is to be appreciated that embodiments described above are intended to be illustrative in every sense, and not restrictive.

## Claims

1. A user authentication based electronic key operating method using an external terminal device for unlocking an electronic locking device by an electronic key, the method comprising:
transmitting a first UID of the electronic key to an external terminal device in which user authentication has been completed via a first wireless communication means;
receiving an activation signal which activates an electronic key from the external terminal device via the first wireless communication means when the first UID is included in at least one second UID stored in the external terminal device;
receiving a third UID of the electronic locking device by inserting the activated electronic key into the electronic locking device; and
transmitting an unlocking request signal which is a signal requesting the unlocking to the electronic locking device according to a determination result of whether to unlock based on the third UID.

2. The user authentication based electronic key operating method using an external terminal device of claim 1, wherein the user authentication is authentication using at least one of password, fingerprint information, facial information, iris information, vein distribution information, and voice information.

3. The user authentication based electronic key operating method using an external terminal device of claim 1, wherein in the transmitting of a first UID of the electronic key, the first UID is transmitted to the external terminal device in which location authentication which is authentication about a location of the terminal device is further completed.

4. The user authentication based electronic key operating method using an external terminal device of claim 1, wherein the external terminal device is one of a smart phone, a tablet, a wearable device, and a personal computer.

5. The user authentication based electronic key operating method using an external terminal device of claim 1, further comprising:
between the receiving of an activation signal and the receiving of a third UID,
activating a second wireless communication means to connect to the external terminal device or a management server,
wherein a usage history of the electronic key is transmitted to the external terminal device or the management server via the second wireless communication means.

6. The user authentication based electronic key operating method using an external terminal device of claim 5, wherein the second wireless communication means is one of Bluetooth, Zigbee, and wireless LAN.

7. The user authentication based electronic key operating method using an external terminal device of claim 1, wherein the first wireless communication means is NFC.

8. A user authentication based electronic key using an external terminal device, comprising:
a power supply module including a battery;
a first wireless communication module which transmits a first UID of the electronic key to an external terminal device in which user authentication has been completed via a first wireless communication means, and receives an activation signal which activates the electronic key from the external terminal device via the first wireless communication means when the first UID is included in at least one second UID stored in the external terminal device; and
a locking device connection module which is inserted into an electronic locking device to receive a third UID of the electronic locking device and transmits an unlocking request signal which is a signal requesting the unlocking to the electronic locking device according to a determination result of whether to unlock based on the third UID.

9. The user authentication based electronic key using an external terminal device of claim 8, further comprising:
a second wireless communication module which activates a second wireless communication means when the activation signal is received to connect to the external terminal device or a management server to transmit a usage history of the electronic key to the external terminal device or the management server.

10. A security system using a user authentication based electronic key, comprising:
an external terminal device which performs user authentication;
an electronic key which transmits a first UID to the external terminal device via a first wireless communication means and receives an activation signal which activates the electronic key from the external terminal device via the first wireless communication means when the first UID is included in at least one second UID stored in the external terminal device;
an electronic locking device which transmits a third UID to the electronic key when the activated electronic key is inserted and receives an unlocking request signal which is a signal requesting the unlocking from the electronic key; and
a management server which is connected to the electronic key via the second wireless communication means to store a usage history of the electronic key.
